# EUROPEAN PATENT SPECIFICATION

(11) **EP 4 112 956 B1**
(45) Date of publication and mention of the grant of the patent: **23.10.2024**
(21) Application number: 21760364.6
(22) Date of filing: 08.01.2021
(51) Int. Cl.: F16C 19/26, F16C 33/46, F16C 33/56, F16C 33/54, F16C 19/46

(54) **CYLINDRICAL ROLLER BEARING WITH OUTER RING**
ZYLINDERROLLENLAGER MIT AUSSENRING
ROULEMENT À ROULEAUX CYLINDRIQUES AVEC BAGUE EXTÉRIEURE

(30) Priority: 28.02.2020 JP 2020033342
(43) Date of publication of application: 04.01.2023
(73) Proprietor: NSK Ltd., Tokyo 141-8560 (JP)
(72) Inventor: KUMAGAI Hirofumi, Takasaki-shi, Gunma 370-3344 (JP); NISHIMURA Nobuhiko, Takasaki-shi, Gunma 370-3344 (JP); AKAYAMA Tokuichiro, Takasaki-shi, Gunma 370-3344 (JP)
(74) Representative: Grünecker Patent- und Rechtsanwälte PartG mbB
(86) International application number: PCT/JP2021/000534
(87) International publication number: WO 2021/171800

(56) References cited:
- EP-A1- 0 379 869
- DE-A1- 102013 225 342
- DE-A1- 102014 203 827
- JP-A- 2007 056 932
- JP-A- 2011 137 534
- JP-A- H02 229 912
- US-A- 4 907 898

## Description

### TECHNICAL FIELD

The present invention relates to a cylindrical roller bearing with an outer ring, and particularly relates to a cylindrical roller bearing with an outer ring to be applied to a transmission or the like.

### BACKGROUND ART

In the related art, various types of rolling bearings are known in which a retainer whose pockets accommodate rollers is integrated with an inner ring or an outer ring by retaining the inner ring or the outer ring.

For example, in a needle bearing described in Patent Literature 1, a holding tab provided on a ring portion of a retainer is engaged with an inclined surface portion formed on an inner ring or an outer ring to prevent the retainer from falling off.

Further, in a cylindrical roller bearing described in Patent Literature 2, a protrusion is provided on an axial side surface of a retainer, and the protrusion is engaged with a hole provided in an annular guide member disposed on a lateral side of the retainer, and thereby an inward flange of an outer ring is sandwiched between cylindrical rollers and the guide member, and the retainer is prevented from falling off from the outer ring.

Patent Literature 3 discloses a cylindrical roller bearing with an outer ring having the features of the preamble of claim 1.

### CITATION LIST

### PATENT LITERATURE

Patent Literature 1: US Patent Application Publication No. 2016/0061258 specification
Patent Literature 2: German Patent Application Publication No. 102013225342 specification
Patent Literature 3: German Patent Application Publication No. 102014203827 specification

### SUMMARY OF INVENTION

### TECHNICAL PROBLEM

However, in Patent Literature 1, since it is necessary to machine the inclined surface portion or the like on the inner ring, there is a problem that the manufacturing cost is increased. Further, in Patent Literature 2, since the guide member is separately provided in order to prevent the retainer from falling off, there are problems that the number of components is increased, the manufacturing cost is increased, and the assembling workability is also reduced.

Further, as in Patent Literature 2, in a case of a cylindrical roller bearing in which the cylindrical rollers directly roll on an outer circumferential surface of a shaft, it is required that the cylindrical rollers can be easily inserted into the retainer and that the cylindrical rollers are prevented from falling off from the retainer during transportation before assembly to the shaft.

The present invention has been made in view of the above-described problems, and an object of the present invention is to provide a cylindrical roller bearing with an outer ring which can prevent a retainer from falling off from the outer ring with good assembly workability without increasing the number of components, and which takes into consideration insertion workability of cylindrical rollers and prevention of the cylindrical rollers from falling off from the retainer.

### SOLUTION TO PROBLEM

The above-described object of the present invention is achieved by the features of claim 1.

### ADVANTAGEOUS EFFECTS OF INVENTION

According to the cylindrical roller bearing with an outer ring of the present invention, since the annular portion of the retainer on the other side in the axial direction is provided with the plurality of protrusion portions each having the engaging portion protruding farther radially outward with respect to the inner circumferential surface of the inward flange portion, the inward flange portion of the outer ring is sandwiched between the cylindrical rollers and the protrusion portions, and the retainer can be prevented from falling off from the outer ring without increasing the number of components with good assembly workability.

Further, on the side surface of the column portion of the retainer, the distance between the flat surface portions of the adjacent column portions is 101.5% to 107% of the roller diameter, the circumferential protrusion amount of the outer diameter-side retaining portion from the flat surface portion is 1% to 4% of the roller diameter, and the circumferential protrusion amount of the inner diameter-side retaining portion from the flat surface portion is 4% to 10% of the roller diameter, so that the insertion workability of the cylindrical rollers and the prevention of the cylindrical rollers from falling off from the retainer can be realized.

### BRIEF DESCRIPTION OF DRAWINGS

FIG. 1 is a perspective view of a cylindrical roller bearing with an outer ring according to a first embodiment of the present invention.
FIG. 2 is a longitudinal cross-sectional view of the cylindrical roller bearing with an outer ring according to the first embodiment.
FIG. 3 is a cross-sectional view taken along a line III-III in FIG. 2.
FIG. 4A is a longitudinal cross-sectional view of a retainer in FIG. 1, and FIG. 4B is a side view of the retainer as viewed from a direction IV in FIG. 4A.
FIG. 5 is a perspective view illustrating a state in which the cylindrical roller bearing with an outer ring of FIG. 1 is assembled to a mating component.
FIG. 6 is a cross-sectional view illustrating a state in which the cylindrical roller bearing with an outer ring of FIG. 1 is assembled to another mating component.
FIG. 7 is a side view illustrating a case where the outer ring of FIG. 1 is deformed into an elliptical shape.
FIG. 8 is a side view illustrating a retainer according to a first modification in which the number of protrusion portions is different.
FIGS. 9A and 9B are side views illustrating retainers according to second and third modifications in which a circumferential length of the protrusion portion is different.
FIG. 10 is a side view illustrating a retainer according to a fourth modification in which a shape of an engaging portion of the protrusion portion is different.
FIG. 11 is a side view illustrating a retainer according to a fifth modification in which circumferential lengths of the protrusion portions are different from one another.
FIG. 12 is a view of a retainer in a cylindrical roller bearing with an outer ring according to a second embodiment of the present invention as viewed from an outer diameter side.
FIG. 13 is a view of a retainer in a cylindrical roller bearing with an outer ring according to a third embodiment of the present invention as viewed from an outer diameter side.
FIG. 14 is a cross-sectional view of a cylindrical roller bearing with an outer ring according to a fourth embodiment of the present invention.

### DESCRIPTION OF EMBODIMENTS

Hereinafter, a cylindrical roller bearing with an outer ring according to each embodiment of the present invention will be described in detail with reference to the drawings.

### (First Embodiment)

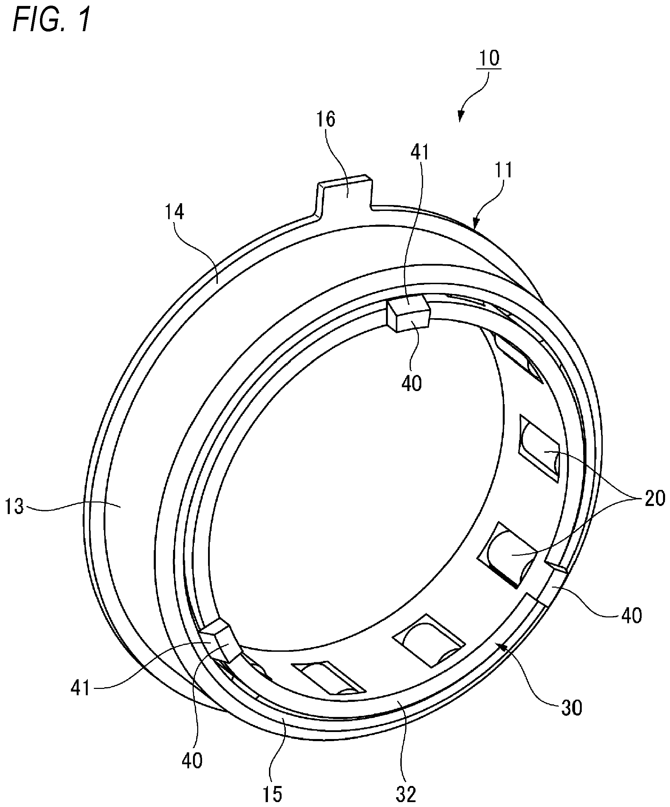

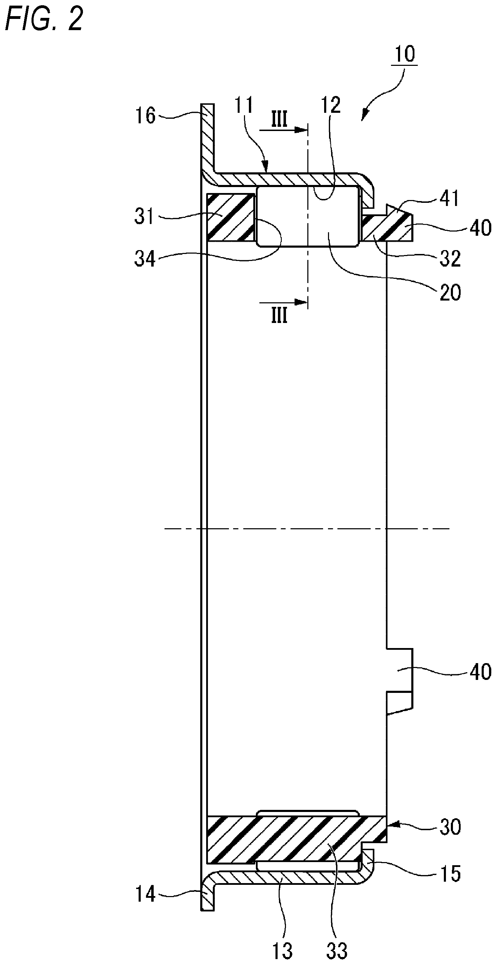

As illustrated in FIGS. 1 and 2, a cylindrical roller bearing 10 with an outer ring according to a first embodiment includes an outer ring 11, a plurality of cylindrical rollers 20, and a retainer 30. The outer ring 11 is formed into an annular shape by pressing a metal plate such as a thin steel plate. The outer ring 11 includes a cylindrical portion 13 having an outer ring raceway surface 12 on an inner circumferential surface thereof, an outward flange portion 14 extending radially outward from an end portion on one side in an axial direction of the cylindrical portion 13, and an inward flange portion 15 extending radially inward from an end portion on the other side in the axial direction of the cylindrical portion 13.

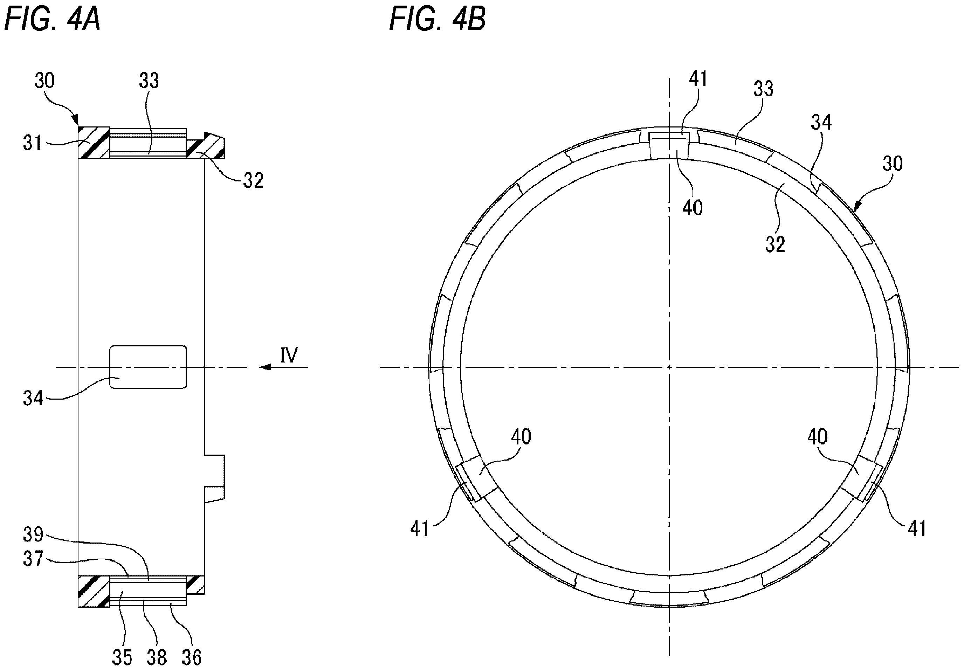

The retainer 30 is made of resin, and as illustrated in FIGS. 4A and 4B, includes a pair of annular portions 31, 32 spaced apart in the axial direction, and a plurality of column portions 33 connecting the pair of annular portions 31, 32 and arranged at intervals in a circumferential direction.

The plurality of cylindrical rollers 20 are held in a plurality of pockets 34 each of which is formed by adjacent column portions 33 and the pair of annular portions 31, 32 of the retainer 30, and are disposed to be rollable with respect to the outer ring raceway surface 12.

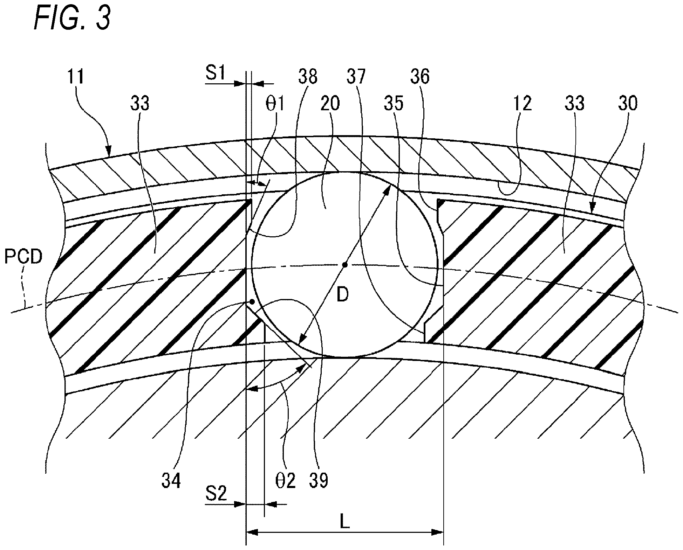

As illustrated in FIG. 3, on a circumferential side surface of the column portion 33 of the retainer 30, a flat surface portion 35 in which the side surfaces of the adjacent column portions 33 forming the pocket 34 are parallel to each other, and an outer diameter-side retaining portion 36 and an inner diameter-side retaining portion 37 respectively protruding from the flat surface portion 35 in the circumferential direction on an outer diameter side and an inner diameter side are formed.

The flat surface portions 35 guide the cylindrical rollers 20 in the circumferential direction, and the outer diameter-side retaining portions 36 and the inner diameter-side retaining portions 37 prevent the cylindrical rollers 20 from falling out of the pockets 34.

A distance L between the flat surface portions 35 of adjacent column portions 33 is 101.5% to 107% (1.015D ≤ L ≤ 1.070D) of a roller diameter D, a circumferential protrusion amount S1 of the outer diameter-side retaining portion 36 from the flat surface portion 35 is 1% to 4% (0.01D ≤ S1 ≤ 0.04D) of the roller diameter D, and a circumferential protrusion amount S2 of the inner diameter-side retaining portion 37 from the flat surface portion 35 is set to 4% to 10% (0.04D ≤ S2 ≤ 0.10D) of the roller diameter D. The protrusion amount S1 of the outer diameter-side retaining portion 36 is smaller than the protrusion amount S2 of the inner diameter-side retaining portion 37 (S1 < S2).

Since an engagement margin between the outer diameter-side retaining portion 36 and the cylindrical roller 20 is set to be small due to the circumferential protrusion amount S1, the cylindrical roller 20 can be easily assembled into the retainer 30 without damaging the retainer 30 even when the cylindrical roller 20 is pushed into the pocket 34 of the retainer 30 from the outer diameter side. Further, since the outer ring 11 is disposed on the outer diameter side of the cylindrical rollers 20 held by the retainer 30, the cylindrical rollers 20 do not fall off from the outer diameter side of the pockets 34 when the bearing is used. Therefore, the engagement margin on the outer diameter side can be set to be smaller than an engagement margin on the inner diameter side as long as, in an assembly process of the bearing, the retainer 30 into which the cylindrical rollers 20 are assembled can hold the cylindrical rollers 20 until the retainer 30 is inserted into the outer ring 11.

Further, since the engagement margin on the inner diameter side between the inner diameter-side retaining portion 37 and the cylindrical roller 20 is set to be large due to the circumferential protrusion amount S2, the cylindrical rollers 20 can be prevented from falling off from the inner diameter side of the pocket 34 during transportation before assembly to the shaft or during an assembly process to the shaft.

The flat surface portion 35 is provided in a radially intermediate portion of the pocket 34 including a position through which a pitch circle diameter PCD of each cylindrical roller 20 passes. The outer diameter-side retaining portion 36 and the inner diameter-side retaining portion 37 are connected to the flat surface portion 35 by inclined surfaces 38, 39, respectively. Further, an angle θ1 formed by the outer diameter-side inclined surface 38 and the flat surface portion 35 is set to be smaller than an angle θ2 formed by the inner diameter-side inclined surface 39 and the flat surface portion 35 (θ1 < θ2), and is preferably set to be about 1/3 to 1/2 of the angle θ2 (θ2/3 ≤ θ1 ≤ θ2/2).

Further, in the retainer 30 of the present embodiment, the annular portion 32 on the other side in the axial direction is provided with, at equal intervals in the circumferential direction, a plurality of (three in the present embodiment) protrusion portions 40 each having an engaging portion 41 protruding radially outward with respect to an inner circumferential surface of the inward flange portion 15. In this case, the protrusion portion 40 is provided to extend toward the other side in the axial direction from an end surface on the other side in the axial direction of the annular portion 32. In the engaging portion 41, a portion having a triangular cross section which increase in thickness from the other side in the axial direction toward the one side in the axial direction has a predetermined circumferential length on an outer diameter side of the protrusion portion 40. An outer circumferential surface of the annular portion 32 faces the inner circumferential surface of the inward flange portion 15 with a slight radial gap therebetween, and the end surface on the other side in the axial direction of the annular portion 32 is located on (protrudes toward) the other side in the axial direction with respect to a side surface on the other side in the axial direction of the inward flange portion 15.

Accordingly, when the outer ring 11 is inserted into the retainer 30, in which the cylindrical rollers 20 are assembled, from the other side in the axial direction, the engaging portions 41 are pressed by the inner circumferential surface of the inward flange portion 15 and elastically deformed toward the inner diameter side, and thus the inward flange portion 15 climbs over the engaging portions 41. Then, the inward flange portion 15 is sandwiched at the outer circumferential surface of the annular portion 32 between axial end surfaces of the cylindrical rollers 20 and side surfaces on the one side in the axial direction of the protrusion portions 40, and the retainer 30 does not fall off from the outer ring 11 even in the single bearing. In the related art, the cylindrical rollers are inserted from the inner side after the retainer is inserted into the outer ring, but in the present embodiment, the retainer 30 and the cylindrical rollers 20 can be combined in advance to form an intermediate assembly and then assembled to the outer ring 11, and the assemblability can be improved.

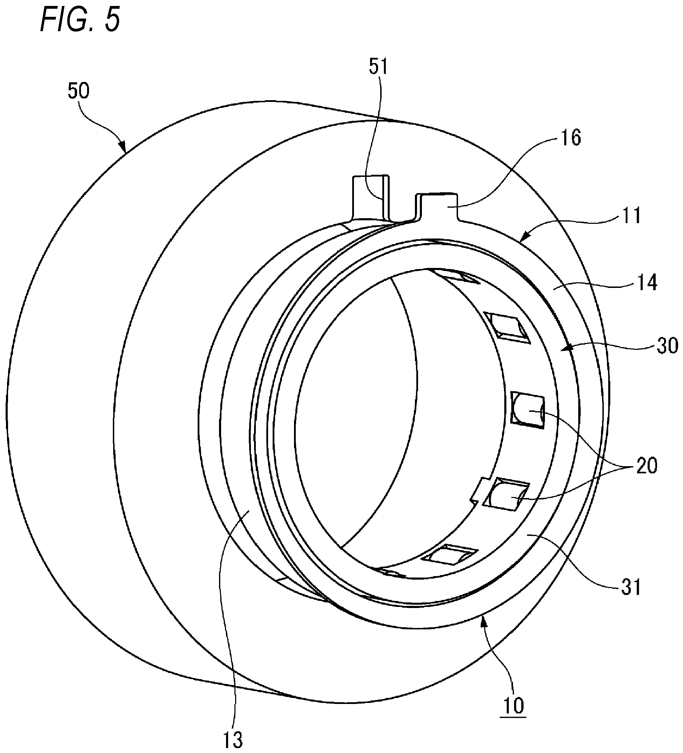

Further, the outward flange portion 14 of the outer ring 11 is provided with a projection portion 16, which further extends toward the outer diameter side, in a part thereof in the circumferential direction. As illustrated in FIG. 5, the cylindrical roller bearing 10 with an outer ring is used by press-fitting the outer circumferential surface of the cylindrical portion 13 of the outer ring 11 into a mating member 50, and the projection portion 16 is fitted into a recess portion 51 of the mating member 50, and thus a position of the cylindrical roller bearing 10 with an outer ring in the circumferential direction with respect to the mating member 50 can be regulated, and creep can be prevented. In the present embodiment, the projection portion 16 is provided at one position in the circumferential direction, but may be provided at two or more positions.

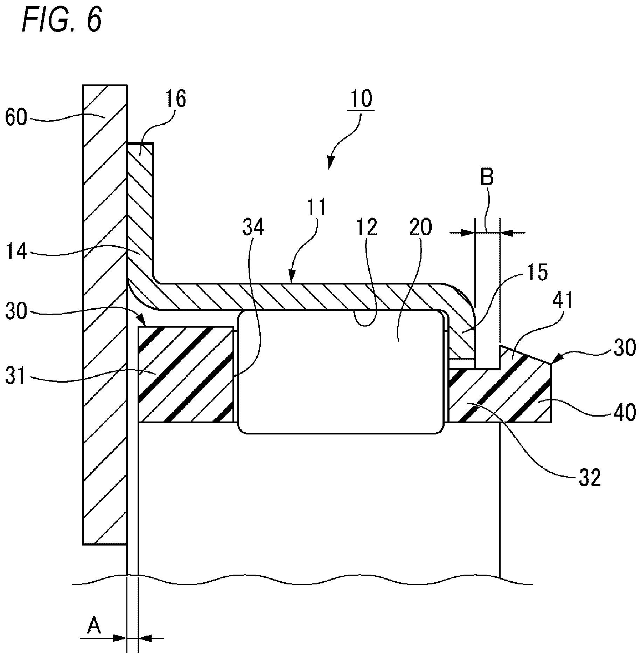

Further, as illustrated in FIG. 6, when an axial distance between a flat surface on the one side in the axial direction of the outward flange portion 14 and an end surface on the one side in the axial direction of the annular portion 31 on the one side in the axial direction is set as A, and an axial distance between a flat surface on the other side in the axial direction of the inward flange portion 15 and a side surface on the one side in the axial direction of the engaging portion 41 is set as B, B is greater than A (B > A), and (A + 0.1 mm) ≤ B ≤ (A + 1.0 mm) is preferably satisfied. This condition is based on the premise that an axial center of the cylindrical roller 20 and an axial center of the pocket 34 coincide with each other.

Accordingly, when another mating member 60 to be abutted against the flat surface on the one side in the axial direction of the outward flange portion 14 of the outer ring 11 is provided on a lateral side of the cylindrical roller bearing 10 with an outer ring, the retainer 30 is moved to a left side in the drawing, and the annular portion 31 is abutted against the mating member 60 before the engaging portions 41 are abutted against the inward flange portion 15. Therefore, the engaging portions 41 of the retainer 30 having a relatively low strength can be prevented from being damaged due to contact with or sliding with respect to the outer ring 11.

As described above, according to the cylindrical roller bearing 10 with an outer ring of the present embodiment, since the annular portion 32 on the other side in the axial direction of the retainer 30 is provided with the plurality of protrusion portions 40 each having the engaging portion 41 protruding radially outward with respect to the inner circumferential surface of the inward flange portion 15, the inward flange portion 15 of the outer ring 11 is sandwiched between the cylindrical rollers 20 and the protrusion portions 40, and the retainer 30 can be prevented from falling off from the outer ring 11 without increasing the number of components with good assembly workability.

Further, when the axial distance between the flat surface on the one side in the axial direction of the outward flange portion 14 and the end surface on the one side in the axial direction of the annular portion 31 on the one side in the axial direction is set as A, and the axial distance between the flat surface on the other side in the axial direction of the inward flange portion 15 and the side surface on the one side in the axial direction of the engaging portion 41 is set as B, it is set that B is greater than A, so that the engaging portions 41 of the retainer 30 are less likely to come into contact with or slide with respect to the inward flange portion 15 of the outer ring 11, and the engaging portions 41 can be prevented from being damaged.

Further, on the side surface of the column portion 33 of the retainer 30, the distance L between the flat surface portions 35 of the adjacent column portions 33 is 101.5% to 107% of the roller diameter D, the circumferential protrusion amount S1 of the outer diameter-side retaining portion 36 from the flat surface portion 35 is 1% to 4% of the roller diameter D, and the circumferential protrusion amount S2 of the inner diameter-side retaining portion 37 from the flat surface portion 35 is 4% to 10% of the roller diameter D, so that the insertion workability of the cylindrical rollers 20 and the prevention of the cylindrical rollers 20 from falling off from the retainer 30 can be realized.

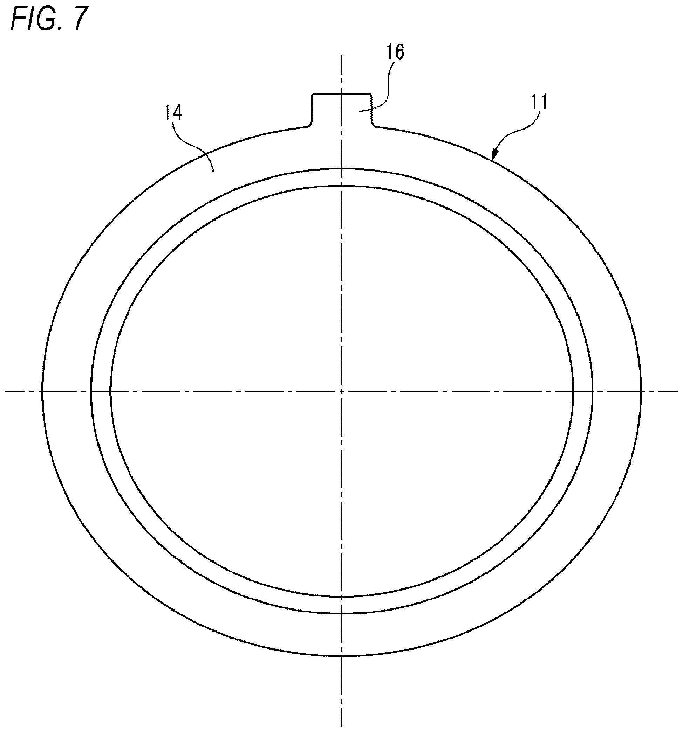

Further, it is preferable that three or more protrusion portions 40 are provided at equal intervals in the circumferential direction, and thus, as illustrated in FIG. 7, even when the outer ring 11 is an elliptical shape (in FIG. 7, a vertical axis passing through the projection portion 16 is a short axis, and a horizontal axis is a long axis), the retainer 30 can be prevented from coming out of the outer ring 11.

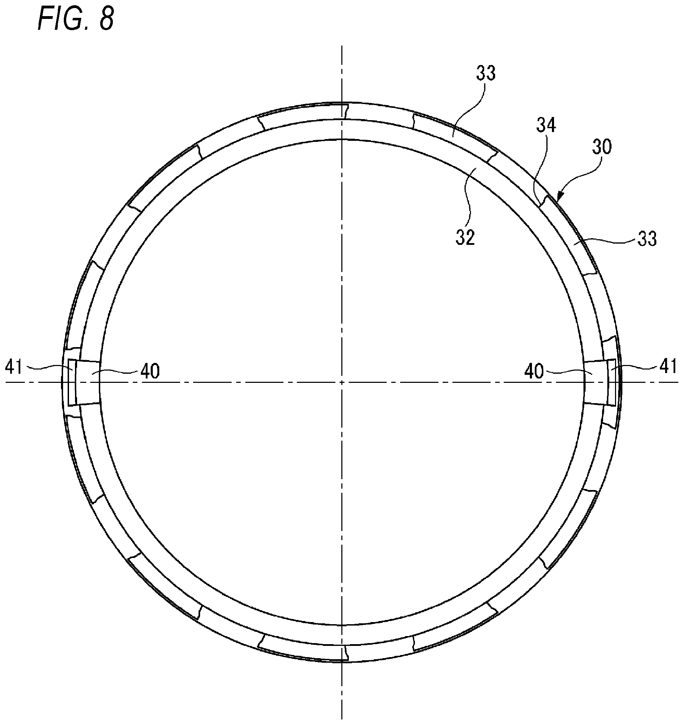

As in a first modification illustrated in FIG. 8, the protrusion portions 40 may be provided at two positions facing each other in the radial direction. In this case, even when the outer ring 11 is an elliptical shape, the outer ring 11 can be easily assembled into the retainer 30 from the axial direction by matching a phase of the long axis of the outer ring 11 having an elliptical shape with a phase in which the protrusion portion 40 of the retainer 30 is provided.

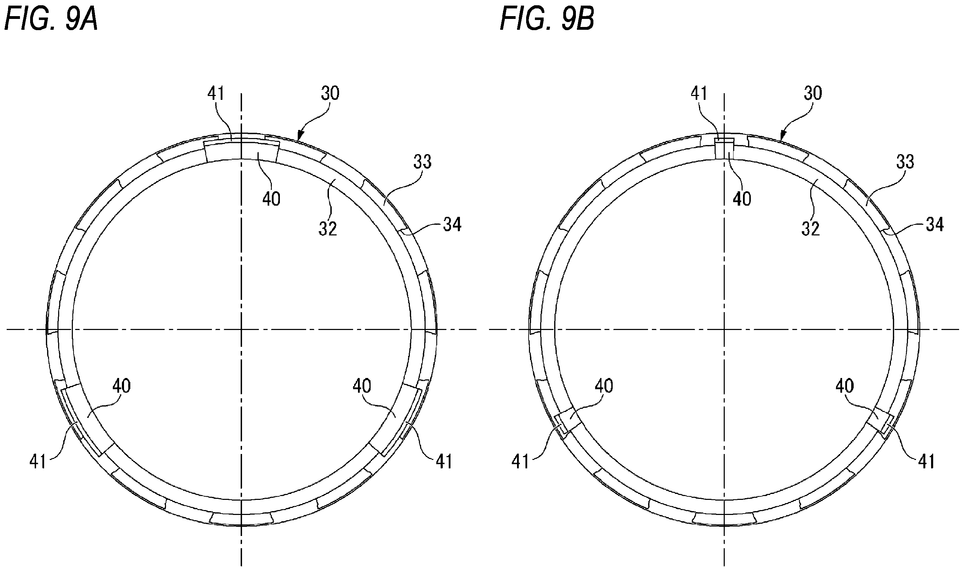

Further, as illustrated in FIGS. 9A and 9B, by setting a total circumferential length occupied by the protrusion portions 40 to 5% to 20% of an entire circumferential length of the axial end surface of the retainer 30, the retainer 30 can be easily assembled into the outer ring 11. When the total circumferential length of the protrusion portions 40 is less than 5% of the entire circumferential length, the holding force is reduced, and when the total circumferential length exceeds 20% of the entire circumferential length, the protrusion portions 40 increase in rigidity, which makes the assembly difficult.

FIG. 9A illustrates a second modification in which the total circumferential length of the protrusion portions 40 is 20% of the entire circumferential length of the axial end surface of the retainer 30. FIG. 9B illustrates a third modification in which the total circumferential length of the protrusion portions 40 is 5% of the entire circumferential length of the axial end surface of the retainer 30.

The circumferential length described above is a length along the circumferential direction at a radial position of the outer circumferential surface of the annular portion 32.

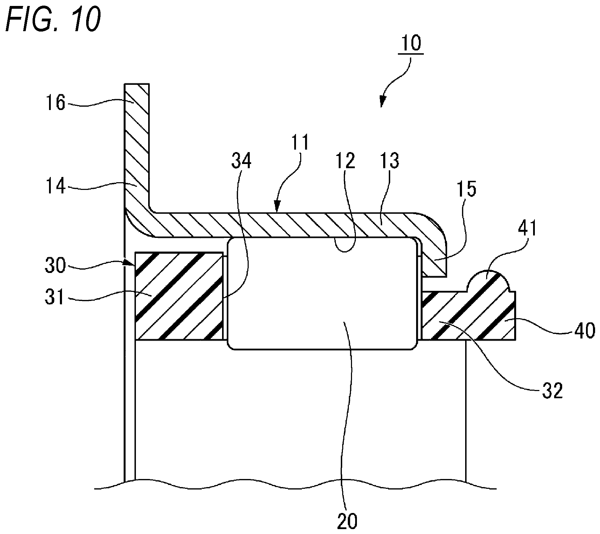

Further, the shape of the engaging portion 41 may be a convex curved shape in cross section, that is, a substantially hemispherical shape as in a fourth modification illustrated in FIG. 10. In the case of a substantially hemispherical shape, since the retainer 30 can be formed by axial drawing instead of radial drawing, cost reduction can be achieved.

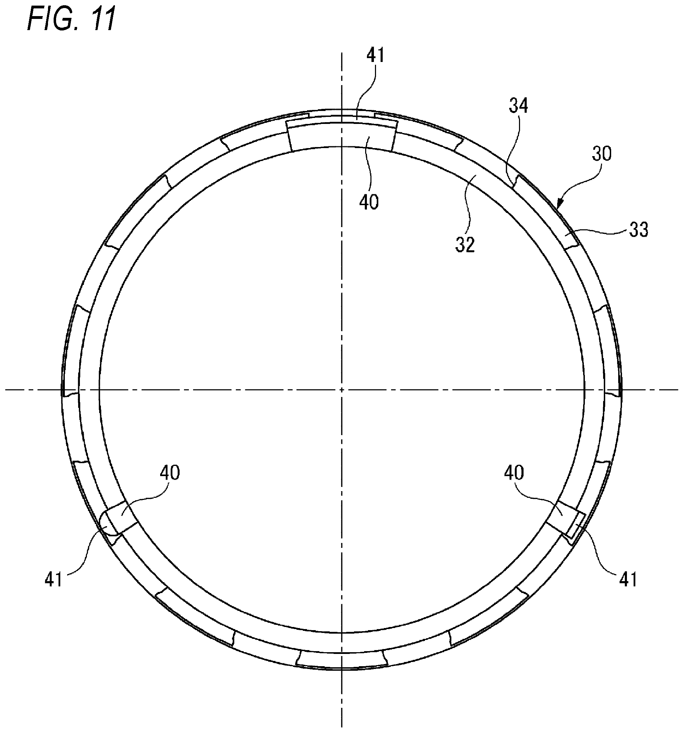

Further, as in a fifth modification illustrated in FIG. 11, the shapes of the engaging portions 41 formed on the plurality of protrusion portions 40 on the circumference may not be the same. Further, the circumferential lengths of the protrusion portions 40 may not be the same.

### (Second Embodiment)

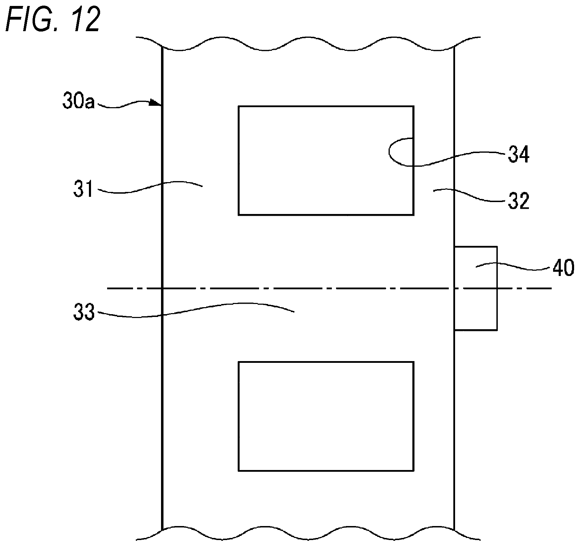

Next, a cylindrical roller bearing with an outer ring according to a second embodiment will be described with reference to FIG. 12.

In a resin retainer 30a of the present embodiment, the protrusion portion 40 provided on a side surface of the annular portion 32 is located in a region in which the column portion 33 having high rigidity is disposed (in the same phase as the column portion 33) in the circumferential direction.

Specifically, the protrusion portion 40 is formed at a phase (position) which is a center in the circumferential direction of the column portion 33, and a circumferential length of the protrusion portion 40 is smaller than a circumferential length of the column portion 33. When the circumferential length of the column portion 33 is small, the circumferential length of the protrusion portion 40 may be equal to or greater than the circumferential length of the column portion 33 in a state where a circumferential center position of the column portion and a circumferential center position of the protrusion portion 40 coincide with each other.

Accordingly, when an intermediate assembly in which the retainer 30a and the cylindrical rollers 20 are assembled in advance is assembled to the outer ring 11 (when the inward flange portion 15 of the outer ring 11 rides over the protrusion portions 40 of the retainer 30a while the protrusion portions 40 of the retainer 30a are elastically deformed), deformation of the retainer 30a can be restricted, and the cylindrical rollers 20 can be prevented from falling off from the retainer 30a.

In the first embodiment, since the protrusion portions 40 are disposed at equal intervals in the circumferential direction, a circumferential position relationship (phase) between the protrusion portions 40 and the column portions 33 is any relationship depending on the number of rollers. On the other hand, in the present embodiment, in order to satisfy the circumferential position relationship between the protrusion portions 40 and the column portions 33, the protrusion portions 40 are not necessarily disposed at equal intervals in the circumferential direction, but are preferably disposed at positions as close to each other as possible.

Other configurations and operations are the same as those of the cylindrical roller bearing 10 with an outer ring of the first embodiment.

### (Third Embodiment)

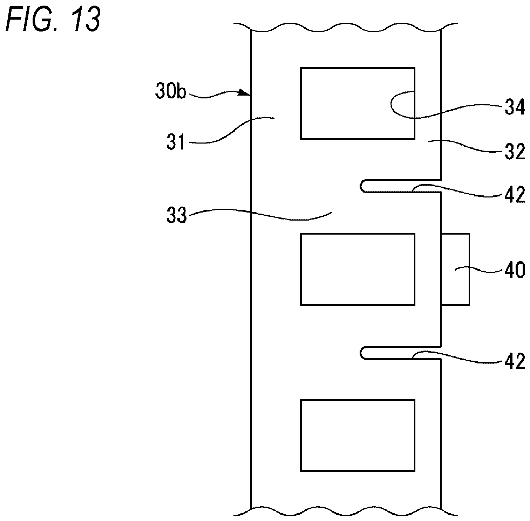

Next, a cylindrical roller bearing with an outer ring according to a third embodiment will be described with reference to FIG. 13. In a resin retainer 30b of the present embodiment, the protrusion portion 40 provided on a side surface of the annular portion 32 is located in a region in which the pocket 34 are disposed (in the same phase as the pocket 34) in the circumferential direction, and slits 42 extending in the axial direction from the annular portion 32 are formed in the column portions 33 on both sides in the circumferential direction of the pocket 34 at which the protrusion portion 40 is located. The slit 42 is formed in a circumferential center portion of the column portion 33 up to an axial middle position.

Accordingly, when the outer ring 11 is inserted from the axial direction into the retainer 30b in which the cylindrical rollers 20 are assembled, the protrusion portions 40 of the retainer 30b are easily deformed, and the assemblability between the outer ring 11 and the retainer 30b can be improved.

Other configurations and operations are the same as those of the cylindrical roller bearing 10 with an outer ring of the first embodiment.

### (Fourth Embodiment)

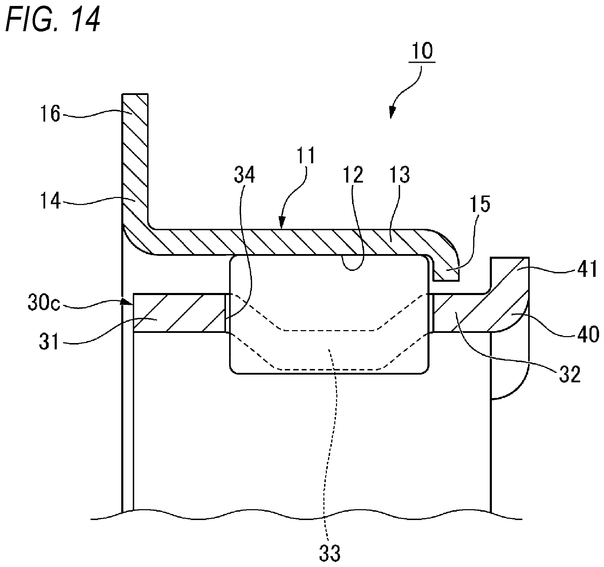

Next, a cylindrical roller bearing with an outer ring according to a fourth embodiment will be described with reference to FIG. 14.

In the cylindrical roller bearing 10 with an outer ring according to the present embodiment, a retainer 30c includes the pair of annular portions 31, 32, the column portions 33, and the protrusion portions 40 as in the above-described embodiment, but the retainer 30c is made of iron.

In the iron retainer 30c, after an intermediate assembly of the cylindrical rollers 20 and the retainer 30c is inserted into the outer ring 11, a portion extending in the axial direction from an end portion on the other side in the axial direction of the annular portion 32 on the other side in the axial direction of the retainer 30c is bent outward in the radial direction to form the protrusion portions 40 having the engaging portions 41.

Similarly to the first embodiment, the protrusion portions 40 are provided at three positions at equal intervals in the circumferential direction.

Other configurations and operations are the same as those of the cylindrical roller bearing 10 with an outer ring of the first embodiment.

The present invention is not limited to the embodiments described above, and modifications, improvements, and the like can be made as appropriate as disclosed in the appended claims.

For example, in the first embodiment, an outer diameter of the annular portion 32 corresponds to an inner diameter of the inward flange portion 15 and is smaller than an outer diameter of the annular portion 31. However, the outer diameter of the annular portion 32 may be set to be the same as the outer diameter of the annular portion 31 by reducing a radial dimension of the inward flange portion 15. Further, the outer diameters of the pair of annular portions 31, 32 may have the same dimension by reducing the outer diameter of the annular portion 31.

Further, the protrusion portion may be formed by providing, on both sides in the circumferential direction of the protrusion portion, a slit extending toward the one side in the axial direction from an end surface on the other side in the axial direction of the annular portion on the other side in the axial direction. In this case, the protrusion portion is formed in the annular portion on the other side in the axial direction without protruding from the end surface on the other side in the axial direction of the annular portion.

The present application is based on the Japanese patent application (Japanese Patent Application No. 2020-033342) filed on February 28, 2020.

### REFERENCE SIGNS LIST

10: cylindrical roller bearing with outer ring
11: outer ring
12: outer ring raceway surface
14: outward flange portion
15: inward flange portion
16: projection portion
20: cylindrical roller
30: retainer
31, 32: annular portion
33: column portion
34: pocket
35: flat surface portion
36: outer diameter-side retaining portion
37: inner diameter-side retaining portion
38, 39: inclined surface
40: protrusion portion
41: engaging portion

## Claims

1. A cylindrical roller bearing (10) with an outer ring (11), comprising:
an outer ring (11) which includes:
a cylindrical portion having an outer ring raceway surface (12) on an inner circumferential surface thereof;
an outward flange portion (14) extending radially outward from an end portion on one side in an axial direction of the cylindrical portion; and
an inward flange portion (15) extending radially inward from an end portion on the other side in the axial direction of the cylindrical portion;
a plurality of cylindrical rollers (20) which are disposed rollably on the outer ring raceway surface (12); and
a retainer (30) which includes a pair of annular portions (31, 32) spaced apart in the axial direction, and a plurality of column portions (33) connecting the pair of annular portions (31, 32) and arranged at intervals in a circumferential direction, and in which the plurality of cylindrical rollers (20) are rollably held by a plurality of pockets (34) each being formed by the column portions (33) adjacent to each other and the pair of annular portions (31, 32), wherein:
the annular portion (32) on the other side in the axial direction is provided with a plurality of protrusion portions (40) each having an engaging portion (41) protruding radially outward with respect to an inner circumferential surface of the inward flange portion (15), **characterized in that**
when an axial distance between a flat surface on the one side in the axial direction of the outward flange portion (14) of the outer ring (11) and an end surface on the one side in the axial direction of the annular portion (31) of the retainer (30) on the one side in the axial direction is set as A, and an axial distance between a flat surface on the other side in the axial direction of the inward flange portion (15) of the outer ring (11) and a side surface on the one side in the axial direction of the engaging portion (41) of the retainer (30) is set as B, B is greater than A.

2. The cylindrical roller bearing (10) with an outer ring (11) according to claim 1, wherein
when the retainer (30) is viewed from the axial direction, a total circumferential length occupied by the protrusion portions (40) is 5% to 20% of an entire circumferential length of the retainer (30).

3. The cylindrical roller bearing (10) with an outer ring (11) according to claim 1 or 2, wherein
the protrusion portion (40) provided on a side surface of the annular portion (32) is located in a region in the same phase as the column portion (33) in a circumferential direction.

4. The cylindrical roller bearing (10) with an outer ring (11) according to claim 1 or 2, wherein:
the protrusion portion (40) provided on a side surface of the annular portion (32) is located in a region in which the pockets (34) are disposed in the same phase as the pocket (34) in the circumferential direction; and
slits (42) extending in the axial direction from the annular portion (32) are formed in the column portions (33) on both sides of the pocket (34) at which the protrusion portion (40) is located.

5. The cylindrical roller bearing (10) with an outer ring (11) according to any one of claims 1 to 4, wherein:
on a circumferential side surface of the column portion (33) of the retainer (30), a flat surface portion (35) in which the side surfaces of the adjacent column portions (33) forming the pocket (34) are parallel to each other, and an outer diameter-side retaining portion (36) and an inner diameter-side retaining portion (37) respectively protruding from the flat surface portion (35) in a circumferential direction on an outer diameter side and an inner diameter side are formed, wherein the outer diameter-side retaining portion (36) and the inner diameter-side retaining portion (37) prevent the cylindrical rollers (20) from falling out of the pocket (34);
a distance L between the flat surface portions (35) of the adjacent column portions (33) is 101.5% to 107% of a roller diameter D;
a circumferential protrusion amount (S1) of the outer diameter-side retaining portion (36) from the flat surface portion (35) is 1 % to 4% of the roller diameter D; and
a circumferential protrusion amount of the inner diameter-side retaining portion (37) from the flat surface portion (35) is 4% to 10% of the roller diameter.

6. The cylindrical roller bearing (10) with an outer ring (11) according to any one of claims 1 to 5, wherein
the retainer (30) is made of resin, and the engaging portion (41) has a triangular cross section or a convex curved cross section.

7. The cylindrical roller bearing (10) with an outer ring (11) according to any one of claims 1 to 3, wherein
the retainer is made of metal, and the protrusion portion (40) is formed by bending a portion axially extending from the end portion on the other side in the axial direction of the annular portion (32) on the other side in the axial direction.

## Patentansprüche

1. Zylinderrollenlager (10) mit einem Außenring (11), das umfasst:
einen Außenring (11), der enthält:
einen zylindrischen Abschnitt, der eine Außenring-Laufbahnfläche (12) an seiner Innenumfangsfläche aufweist;
einen nach außen gerichteten Flanschabschnitt (14), der sich von einem Endabschnitt an einer Seite in einer axialen Richtung des zylindrischen Abschnitts radial nach außen erstreckt; sowie
einen nach innen gerichteten Flanschabschnitt (15), der sich von einem Endabschnitt an der anderen Seite in der axialen Richtung des zylindrischen Abschnitts radial nach innen erstreckt;
eine Vielzahl von Zylinderrollen (20), die an der Außenring-Laufbahnfläche (12) so angeordnet sind, dass sie rollen können; und
einen Käfig (30), der ein Paar ringförmiger Abschnitte (31, 32), die in der axialen Richtung beabstandet sind, sowie eine Vielzahl von Säulenabschnitten (33) enthält, die die paarigen ringförmigen Abschnitte (31, 32) verbinden und in Abständen in einer Umfangsrichtung angeordnet sind, wobei die Vielzahl von Zylinderrollen (20) von einer Vielzahl von Taschen (34), die jeweils durch die zueinander benachbarten Säulenabschnitte (33) und die paarigen ringförmigen Abschnitte (31, 32) gebildet werden, so gehalten werden, dass sie rollen können, und wobei:
der ringförmige Abschnitt (32) an der anderen Seite in der axialen Richtung mit einer Vielzahl von Vorsprungsabschnitten (40) versehen ist, die jeweils einen Eingriffsabschnitt (41) aufweisen, der in Bezug auf eine Innenumfangsfläche des nach innen gerichteten Flanschabschnitts (15) radial nach außen vorsteht, **dadurch gekennzeichnet, dass**
wenn ein axialer Abstand zwischen einer ebenen Fläche an der einen Seite in der axialen Richtung des nach außen gerichteten Flanschabschnitts (14) des Außenrings (11) und einer Endfläche an der einen Seite in der axialen Richtung des ringförmigen Abschnitts (31) des Käfigs (30) an der einen Seite in der axialen Richtung als A festgelegt ist, und ein axialer Abstand zwischen einer ebenen Fläche an der anderen Seite in der axialen Richtung des nach innen gerichteten Flanschabschnitts (15) des Außenrings (11) und einer Seitenfläche an der einen Seite in der axialen Richtung des Eingriffsabschnitts (41) des Käfigs (30) als B festgelegt ist, B größer ist als A.

2. Zylinderrollenlager (10) mit einem Außenring (11) nach Anspruch 1,
wobei
bei Sicht auf den Käfig (30) in der axialen Richtung eine Gesamt-Umfangslänge, die von den Vorsprungsabschnitten (40) eingenommen wird, 5 % bis 20 % einer vollständigen Umfangslänge des Käfigs (30) beträgt.

3. Zylinderrollenlager (10) mit einem Außenring (11) nach Anspruch 1 oder 2, wobei
der Vorsprungsabschnitt (40), der an einer Seitenfläche des ringförmigen Abschnitts (32) vorhanden ist, sich in einem Bereich in der gleichen Phase wie der Säulenabschnitt (33) in einer Umfangsrichtung befindet.

4. Zylinderrollenlager (10) mit einem Außenring (11) nach Anspruch 1 oder 2, wobei:
der Vorsprungsabschnitt (40), der an einer Seitenfläche des ringförmigen Abschnitts (32) vorhanden ist, sich in einem Bereich befindet, in dem die Taschen (34) in der gleichen Phase angeordnet sind wie die Tasche (34) in der Umfangsrichtung; und
Schlitze (42), die sich in der axialen Richtung von dem ringförmigen Abschnitt (32) aus erstrecken, in den Säulenabschnitten (33) an beiden Seiten der Tasche (34) ausgebildet sind, an der sich der Vorsprungsabschnitt (40) befindet.

5. Zylinderrollenlager (10) mit einem Außenring (11) nach einem der Ansprüche 1 bis 4, wobei:
an einer Umfangsseiten-Fläche des Säulenabschnitts (33) des Käfigs (30) ein ebener Flächenabschnitt (35), in dem die Seitenflächen der benachbarten Säulenabschnitte (33), die die Tasche (34) bilden, parallel zueinander sind, und ein Halteabschnitt (36) der Außendurchmesser-Seite sowie ein Halteabschnitt (37) der Innendurchmesser-Seite, die von dem ebenen Flächenabschnitt (35) in einer Umfangsrichtung an einer Außendurchmesser-Seite bzw. einer Innendurchmesser-Seite vorstehen, ausgebildet sind, wobei der Halteabschnitt (36) der Außendurchmesser-Seite und der Halteabschnitt (37) der Innendurchmesser-Seite verhindern, dass die Zylinderrollen (20) aus der Tasche (34) herausfallen;
ein Abstand L zwischen den ebenen Flächenabschnitten (35) der benachbarten Säulenabschnitte (33) 101,5 % bis 107 % eines Rollendurchmessers D beträgt;
ein Maß (S1) des Vorstehens des Halteabschnitts (36) der Außendurchmesser-Seite von dem ebenen Flächenabschnitt (35) am Umfang 1 % bis 4 % des Rollendurchmessers D beträgt, und
ein Maß des Vorstehens des Halteabschnitts (37) der Innendurchmesser-Seite von dem ebenen Flächenabschnitt (35) am Umfang 4 % bis 10 % des Rollendurchmessers beträgt.

6. Zylinderrollenlager (10) mit einem Außenring (11) nach einem der Ansprüche 1 bis 5, wobei
der Käfig (30) aus Kunststoff besteht und der Eingriffsabschnitt (41) einen dreieckigen Querschnitt oder einen konvex gekrümmten Querschnitt hat.

7. Zylinderrollenlager (10) mit einem Außenring (11) nach einem der Ansprüche 1 bis 3, wobei
der Käfig aus Metall besteht und der Vorsprungsabschnitt (40) ausgebildet wird, indem ein Abschnitt gebogen wird, der sich axial von dem Endabschnitt an der anderen Seite in der axialen Richtung des ringförmigen Abschnitts (32) an der anderen Seite in der axialen Richtung erstreckt.

## Revendications

1. Roulement à rouleaux cylindriques (10) avec une bague externe (11), comprenant :
une bague externe (11) qui comprend :
une portion cylindrique ayant une surface de chemin de roulement de bague externe (12) sur une surface circonférentielle interne correspondante ;
une portion de bride extérieure (14) s'étendant radialement vers l'extérieur depuis une portion d'extrémité sur un côté en direction axiale de la portion cylindrique ; et
une portion de bride intérieure (15) s'étendant radialement vers l'intérieur depuis une portion d'extrémité sur l'autre côté en direction axiale de la portion cylindrique ;
une pluralité de rouleaux cylindriques (20) qui sont disposés de manière roulante sur la surface de chemin de roulement de la bague externe (12) ; et
un élément de retenue (30) qui comprend une paire de portions annulaires (31, 32) espacées en direction axiale, et une pluralité de portions de colonne (33) connectant la paire de portions annulaires (31, 32) et agencées à intervalles en direction circonférentielle, et dans lequel la pluralité de rouleaux cylindriques (20) sont maintenus de manière roulante par une pluralité de poches (34) formées chacune par les portions de colonne (33) adjacentes entre elles et la paire de portions annulaires (31, 32), dans lequel :
la portion annulaire (32) de l'autre côté en direction axiale est pourvue d'une pluralité de portions protubérantes (40) ayant chacune une portion d'engagement (41) protubérant radialement vers l'extérieur par rapport à une surface circonférentielle interne de la portion de bride intérieure (15), **caractérisé en ce que**
quand une distance axiale entre une surface plane sur un côté en direction axiale de la portion de bride extérieure (14) de la bague externe (11) et une surface d'extrémité sur ledit côté en direction axiale de la portion annulaire (31) de l'élément de retenue (30) sur ledit côté en direction axiale est définie comme étant A, et une distance axiale entre une surface plane sur l'autre côté en direction axiale de la portion de bride intérieure (15) de la bague externe (11) et une surface latérale sur ledit côté en direction axiale de la portion d'engagement (41) de l'élément de retenue (30) est définie comme étant B, B est supérieur à A.

2. Roulement à rouleaux cylindriques (10) avec une bague externe (11) selon la revendication 1, dans lequel
quand l'élément de retenue (30) est vu en direction axiale, une longueur circonférentielle totale occupée par les portions protubérantes (40) est de 5 % à 20 % de la longueur circonférentielle entière de l'élément de retenue (30).

3. Roulement à rouleaux cylindriques (10) avec une bague externe (11) selon la revendication 1 ou 2, dans lequel
la portion protubérante (40) pourvue sur une surface latérale de la portion annulaire (32) est située dans une région dans la même phase que la portion de colonne (33) en direction circonférentielle.

4. Roulement à rouleaux cylindriques (10) avec une bague externe (11) selon la revendication 1 ou 2, dans lequel :
la portion protubérante (40) pourvue sur une surface latérale de la portion annulaire (32) est située dans une région dans laquelle les poches (34) sont disposées dans la même phase que la poche (34) en direction circonférentielle ; et
des fentes (42) s'étendant en direction axiale depuis la portion annulaire (32) sont formées dans les portions de colonne (33) des deux côtés de la poche (34) où se trouve la portion protubérante (40).

5. Roulement à rouleaux cylindriques (10) avec une bague externe (11) selon l'une quelconque des revendications 1 à 4, dans lequel :
sur une surface latérale circonférentielle de la portion de colonne (33) de l'élément de retenue (30), une portion de surface plane (35) dans laquelle les surfaces latérales des portions de colonne adjacentes (33) formant la poche (34) sont parallèles entre elles, et une portion de retenue côté diamètre externe (36) et une portion de retenue côté diamètre interne (37) protubérant respectivement de la portion de surface plane (35) en direction circonférentielle sont formées sur un côté diamètre externe et un côté diamètre interne, dans lequel la portion de retenue côté diamètre externe (36) et la portion de retenue côté diamètre interne (37) empêchent les rouleaux cylindriques (20) de tomber hors de la poche (34) ;
une distance L entre les portions de surface plane (35) des portions de colonne adjacentes (33) est de 101,5 % à 107 % d'un diamètre de rouleau D ;
une quantité de protubérance circonférentielle (S1) de la portion de retenue côté diamètre externe (36) depuis la portion de surface plane (35) est de 1 % à 4 % du diamètre du rouleau D ; et
une quantité de protubérance circonférentielle de la portion de retenue côté diamètre interne (37) depuis la portion de surface plane (35) est de 4 % à 10 % du diamètre du rouleau.

6. Roulement à rouleaux cylindriques (10) avec une bague externe (11) selon l'une quelconque des revendications 1 à 5, dans lequel
l'élément de retenue (30) est réalisé en résine, et la portion d'engagement (41) présente une section transversale triangulaire ou une section transversale incurvée convexe.

7. Roulement à rouleaux cylindriques (10) avec une bague externe (11) selon l'une quelconque des revendications 1 à 3, dans lequel
l'élément de retenue est réalisé en métal, et la portion protubérante (40) est formée en pliant une portion s'étendant axialement depuis la portion d'extrémité de l'autre côté en direction axiale de la portion annulaire (32) de l'autre côté en direction axiale.
